# EUROPÄISCHE PATENTSCHRIFT

(11) **EP 2 064 460 B1**
(45) Veröffentlichungstag und Bekanntmachung des Hinweises auf die Patenterteilung: **21.07.2010**
(21) Anmeldenummer: 07802041.9
(22) Anmeldetag: 31.08.2007
(51) Int. Cl.: F16D 66/02

(54) **SCHEIBENBREMSE, INSBESONDERE FÜR EIN NUTZFAHRZEUG, SOWIE BREMSBELAG FÜR EINE SCHEIBENBREMSE**
DISC BRAKE, IN PARTICULAR FOR A COMMERCIAL VEHICLE, AND BRAKE PAD FOR A DISC BRAKE
FREIN À DISQUE, NOTAMMENT POUR UN VÉHICULE UTILITAIRE, ET GARNITURE DE FREIN POUR UN FREIN À DISQUE

(30) Priorität: 06.09.2006 DE 102006041813
(43) Veröffentlichungstag der Anmeldung: 03.06.2009
(73) Patentinhaber: KNORR-BREMSE Systeme für Nutzfahrzeuge GmbH, 80809 München (DE)
(72) Erfinder: SCHROPP, Josef, 94428 Eichendorf (DE); GASSLBAUER, Franz, 84381 Johanniskirchen (DE)
(74) Vertreter: Mattusch, Gundula
(86) Internationale Anmeldenummer: PCT/EP2007/007623
(87) Internationale Veröffentlichungsnummer: WO 2008/028600

(56) Entgegenhaltungen:
- EP-A- 0 693 635
- DE-A1- 3 726 232
- DE-A1- 10 123 681
- DE-A1- 10 302 334
- GB-A- 1 586 200

## Beschreibung

Die Erfindung betrifft eine Scheibenbremse, insbesondere für ein Nutzfahrzeug, gemäß dem Oberbegriff des Anspruchs 1 sowie einen Bremsbelag für eine Scheibenbremse.

Insbesondere aus Gründen der Betriebssicherheit einer Scheibenbremse ist es erforderlich den Verschleiß der Bremsbeläge zu überwachen, so dass ein notwendiger Austausch des jeweiligen Bremsbelages zu einem bestmöglichen Zeitpunkt erfolgt. Dabei soll der Verschleißzustand der Bremsbeläge zuvor möglichst genau festgestellt werden.

Vor allem aus betriebswirtschaftlichen Gründen besteht die Forderung nach einem optimalen Zeitpunkt des Austausches der Bremsbeläge. Anzustreben ist dabei, einen Austausch erst dann vorzunehmen, wenn der Reibbelag bis auf eine zulässige Minimaldicke abgenutzt ist. D.h., ein früherer Austausch würde einer Optimierung der ersatzbedingten Betriebskosten entgegenstehen, während ein zu später Austausch eine Beeinträchtigung der Funktionssicherheit der Scheibenbremse insgesamt mit sich brächte.

Zur Erkennung des Verschleißzustandes der Bremsbeläge sind verschiedene Maßnahmen bekannt.

So kann eine Verschleißermittlung des Reibbelages elektronisch erfolgen, wobei durch die Belagträgerplatte ein stromleitendes Kabel geführt wird, das bei Verder Reibmasse durchtrennt wird und ein erkennbares Signal in einem Signalgeber gibt, beispielsweise im Fahrerhaus des Kraftfahrzeuges.

Daneben sind Verschleißanzeigen bekannt, die mittels eines Drehpotentiometers eine bei einer Nachstellung der Bremsbeläge zum Ausgleich eines Verschleißhubes sich ergebende Verfahrstrecke einer Nachstelleinrichtung ermitteln, die gleichfalls, beispielsweise durch den Fahrer des Fahrzeuges, anhand einer entsprechenden Anzeigeeinrichtung erkennbar ist.

Zur visuellen Erkennung des Verschleißzustandes der Bremsbeläge kommt beispielsweise eine Konstruktion zum Einsatz, die einen im Bremssattel geführten federbelasteten Stift aufweist, durch den eine verschleißbedingte Verstellung des Bremssattels erkennbar wird.

Der Forderung, eine solche Verschleißanzeige mit geringem baulichen Aufwand zu realisieren, entsprechen die bekannten Verschleißanzeigen allesamt nur ungenügend, da beispielsweise zur Führung des Stiftes eine aufwendige Bearbeitung des Bremssattels erforderlich ist. Die elektrischen bzw. elektronischen Verschleißanzeigen sind ebenfalls nur mit einem erheblichen apparativen Aufwand zu verwirklichen und können überdies, aufgrund des rauen Betriebs, bei dem Nutzfahrzeuge vielfach eingesetzt werden, eine absolut zuverlässige Funktion nicht gewährleisten.

In der GB 1 586 200 A ist ein Bremsbelag geoffenbart, bei dem eine Verschleißanzeige in Form eines Stiftes als separates, gegenüber dem Reibbelag farblich abgesetztes Teil ausgebildet ist, das in einer Bohrung der Belagträgerplatte gehalten ist.

Der Erfindung liegt die Aufgabe zugrunde, eine Scheibenbremse bzw. einen Bremsbelag der gattungsgemäßen Art so weiterzuentwickeln, dass mit konstruktiv geringstem Aufwand eine einfache, zuverlässige und genaue Verschleißanzeige des Bremsbelages möglich ist.

Diese Aufgabe wird durch eine Scheibenbremse mit den Merkmalen des Anspruchs 1 bzw. einen Bremsbelag mit den Merkmalen des Anspruchs 9 gelöst.

Die Verschleißanzeige dieser neuen Scheibenbremse zeichnet sich zunächst einmal dadurch aus, dass sie mit sehr geringem fertigungstechnischen Aufwand zu realisieren ist. Hierdurch ergibt sich eine bemerkenswerte Kostenreduzierung, die vor allem deshalb bedeutungsvoll ist, weil solche Scheibenbremsen in großen Stückzahlen hergestellt und eingesetzt werden.

Wesentlich ist, dass die neue Verschleißanzeige nicht als separates Teil hergestellt werden muss, sondern praktisch in ein funktionsrelevantes Bauteil integriert ist, nämlich in die Belagträgerplatte.

Zweckmäßigerweise ist der einstückig mit der Belagträgerplatte im übrigen verbundene Ansatz dort an der Belagträgerplatte vorgesehen, wo eine Haltefeder positioniert ist, mit der im Zusammenspiel mit einem Haltebügel eine radiale Sicherung des Bremsbelages erreicht wird. Durch eine oberseitige Montageöffnung des Bremssattels, durch die die Bremsbeläge einsetzbar sind, ist ein ungehinderter Blick auf den Ansatz möglich, so dass problemlos der Verschleißzustand des Reibbelages, d.h. dessen Restdicke soweit erkennbar ist, dass der Bremsbelag bei Erreichen einer vorgegebenen Minimal-Verschleißdicke ausgetauscht werden kann.

Erfindungsgemäß ist der Ansatz gegenüber der Anlagefläche, an der der Reibbelag anliegt bzw. befestigt ist, erhaben. Er steht also in Richtung des Reibbelages um ein gewisses Maß vor. Dieses Maß entspricht vorzugsweise der zulässigen Restverschleißdicke des Reibbelages, bei deren Erreichen der Bremsbelag auszutauschen ist. Bei der Überprüfung des Bremsbelages ist also leicht erkennbar, wann dieser ausgetauscht werden muss.

Bevorzugt ist der erhabene Ansatz im Nachbarbereich eines Befestigungshakens der Belagträgerplatte angeordnet, an dem die besagte Haltefeder angeschlossen ist, wobei der Ansatz außerhalb des Überdeckungsbereiches der Haltefeder liegt.

Bevorzugt wird der Ansatz mit angegossen, wenn die Belagträgerplatte als Gussteil ausgebildet ist. Dies erlaubt eine einfache Fertigung, die im wesentlichen ohne zusätzliche Kosten möglich ist. Insofern stellt die neue Scheibenbremse bzw. der neue Bremsbelag ebenfalls eine Verbesserung dar.

Anstelle eines oder mehrerer einzelner Ansätze ist auch die Anformung eines umlaufenden oder teilumlaufenden Ansatzes denkbar, vorzugsweise in dem Bereich der Belagträgerplatte, der ohne Raddemontage von außen einsehbar ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben. Es zeigen:
- Figur 1: einen Teilausschnitt einer Scheibenbremse in einer Draufsicht
- Figur 2: einen Teilausschnitt einer Einzelheit der Scheibenbremse in einer perspektivischen Ansicht
- Figur 3: die Einzelheit in einer Draufsicht.

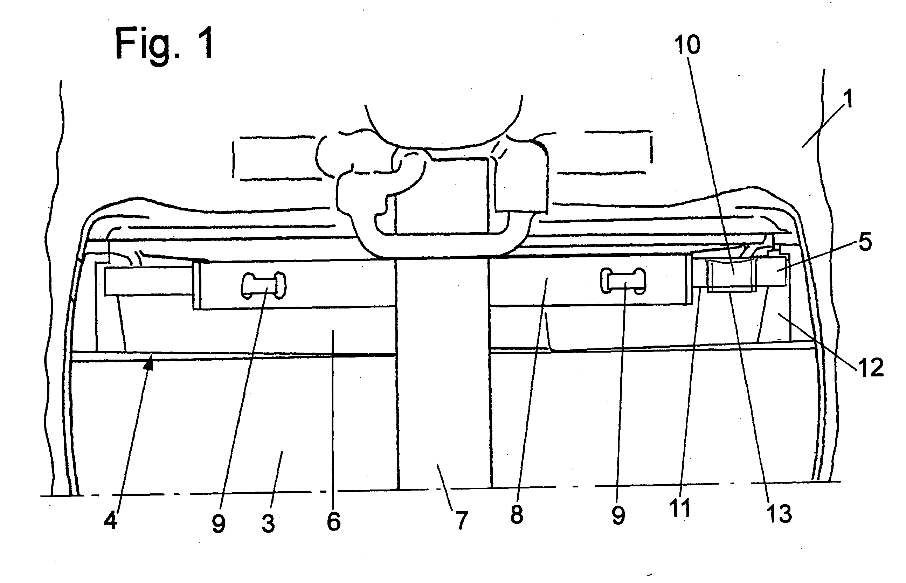

In der Figur 1 ist eine Scheibenbremse, insbesondere für ein Nutzfahrzeug dargestellt, die einen Bremssattel 1 aufweist, der eine Bremsscheibe 3 umfasst, an die bei einer Bremsung beidseitig jeweils aus einer Belagträgerplatte 5 und einem Reibbelag 6 bestehende Bremsbeläge 4 mittels einer nicht dargestellten, im Bremssattel 1 angeordneten Zuspanneinrichtung anpressbar sind.

In der Figur 1 ist lediglich einer, und zwar der zuspannseitige Bremsbelag 2 dargestellt, der in Richtung der Bremsscheibe 3 verschiebbar gelagert ist.

Der Bremsbelag 4 wird mittels einer Haltefeder 8, die sich am oberen Rand der Belagträgerplatte 5 abstützt, und einem darauf wirkenden Haltebügel 10 in einen Schacht eines ortsfesten, nicht dargestellten Bremsträgers gedrückt, wobei der Haltebügel 7 im Bremssattel 1 befestigt ist.

Zur Befestigung der Haltefeder 8 an der Belagträgerplatte 5 sind an der Belagträgerplatte 5 Befestigungshaken 9 angeordnet, in die die Haltefeder 8 eingehängt ist.

Der sich quer zur Drehrichtung der Bremsscheibe 3 erstreckende Haltebügel 7 stützt sich an der Haltefeder 8 ab.

Für eine optische Verschleißerkennung des Reibbelages 6 ist erfindungsgemäß an der Belagträgerplatte 5 ein gegenüber einer Anlagefläche 11 des Reibbelages 6 an der Belagträgerplatte 5 erhabener Ansatz 10 vorgesehen und zwar in einem dem zugeordneten Befestigungshaken 9 benachbarten Bereich, außerhalb des Überdeckungsbereichs der Haltefeder 8.

Für eine einwandfreie visuelle Verschleißerkennung ist von außen eine behinderungsfreie Sicht durch eine Montageöffnung 12 des Bremssattels 1 möglich, die konstruktionsbedingt vorhanden ist und im übrigen dem Einsetzen der Bremsbeläge 2 dient.

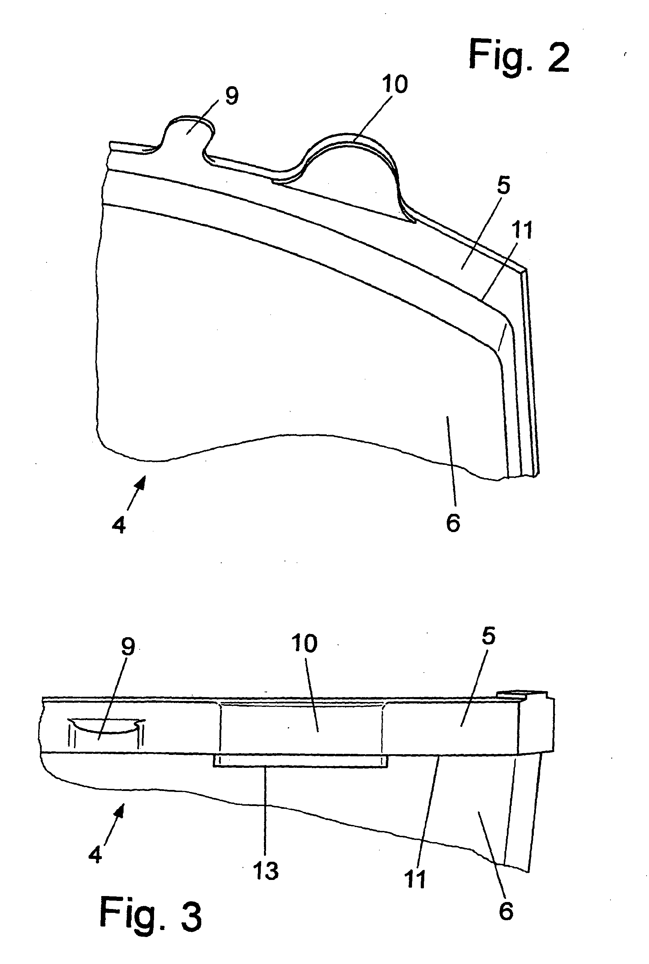

In den Figuren 2 und 3, die einen Teilausschnitt des Bremsbelages 4 wiedergeben, ist deutlich zu erkennen, dass der Ansatz 10 höckerförmig ausgebildet ist und in Richtung des Reibbelages eine Grenzfläche 13 aufweist, die optisch eine Markierung für den maximalen Verschleiß des Reibbelages 6 darstellt. Für den Fall, dass der insoweit abgeschliffene Reibbelag 6 und die Grenzfläche 13 miteinander fluchten, was ohne weiteres durch Inaugenscheinnahme erkennbar ist, muss der Bremsbelag 4 ersetzt werden. Der Abstand der Grenzfläche 13 zur Anlagefläche 11 entspricht somit der zulässigen Restverschleißdicke des Reibbelages 6.

Statt wie im gezeigten Ausführungsbeispiel an einer Seite können selbstverständlich Ansätze 10 beidseitig der Befestigungshaken 9 bzw. der Haltefeder 8 angeordnet sein. Denkbar ist aber auch den Ansatz 10 dann an die übrige Kontur der Belagträgerplatte angepasst als umlaufenden oder teilweise umlaufenden Wulst auszubilden.

### Bezugszeichenliste

- 1: Bremssattel
- 2: Bremsbelag
- 3: Bremsscheibe
- 4: Bremsbelag
- 5: Belagträgerplatte
- 6: Reibbelag
- 7: Haltebügel
- 8: Haltefeder
- 9: Befestigungshaken
- 10: Ansatz
- 11: Anlagefläche
- 12: Montageöffnung
- 13: Grenzfläche

## Patentansprüche

1. Scheibenbremse, insbesondere für ein Nutzfahrzeug, mit einem an einem Bremsträger befestigten Bremssattel (1), der eine Bremsscheibe (3) umfasst, an die bei einer Bremsung jeweils aus einer Belagträgerplatte (5) und einem Reibbelag (6) bestehende Bremsbeläge (4) anpressbar sind, sowie einer optischen Verschleißerkennung, wobei an der Belagträgerplatte (5) zur optischen Verschleißerkennung zumindest ein gegenüber einer Anlagefläche (11) der Belagträgerplatte (5), an der der Reibbelag (6) anliegt, erhabener Ansatz (10) vorgesehen ist, **dadurch gekennzeichnet, dass** der Ansatz einstückig mit der Belagträgerplatte ausgebildet und in einem durch eine Montageöffnung (12) frei einsehbaren Bereich der Belagträgerplatte (5) angeordnet ist.

2. Scheibenbremse nach Anspruch 1, **dadurch gekennzeichnet, dass** der Ansatz (10) höckerartig sich erstreckend in Richtung der Montageöffnung (12) ausgebildet ist.

3. Scheibenbremse nach Anspruch 1 oder 2, **dadurch gekennzeichnet, dass** der Ansatz (10) auf seiner dem Reibbelag (6) zugewandten Seite eine Grenzfläche (13) aufweist, die parallel und abständig zur Anlagefläche (11) verläuft.

4. Scheibenbremse nach Anspruch 3, **dadurch gekennzeichnet, dass** der Abstand der Grenzfläche (13) zur Anlagefläche (11) etwa der zulässigen Restverschleißdicke des Reibbelages (6) entspricht.

5. Scheibenbremse nach einem der vorhergehenden Ansprüche, **dadurch gekennzeichnet, dass** der Ansatz (10) auf dem Rand der Belagträgerplatte (5) vorgesehen ist, an dem Befestigungshaken (9) zur Befestigung einer Haltefeder (8) vorgesehen sind.

6. Scheibenbremse nach Anspruch 5, **dadurch gekennzeichnet, dass** der Ansatz (10) dem Befestigungshaken (9) benachbart, außerhalb des Überdeckungsbereiches der Haltefeder (8) angeordnet ist.

7. Scheibenbremse nach einem der vorhergehenden Ansprüche, **dadurch gekennzeichnet, dass** der Ansatz (10) als zumindest teilweise umlaufender Wulst ausgebildet ist.

8. Scheibenbremse nach einem der vorhergehenden Ansprüche, **dadurch gekennzeichnet, dass** bei Ausbildung der Belagträgerplatte (5) als Gussteil der Ansatz (10) mit angegossen ist.

9. Bremsbelag für eine Scheibenbremse eines Nutzfahrzeuges, mit einer Belagträgerplatte (5) und einem damit verbundenen Reibbelag (6), zur optischen Verschleißerkennung an der Belagträgerplatte (5) zumindest ein gegenüber einer Anlagefläche (11) der Belagträgerplatte (5), an der der Reibbelag (6) befestigt ist, erhabener Ansatz (10) vorgesehen ist, **dadurch gekennzeichnet, dass** der Ansatz einstückig mit der Belagträgerplatte ausgebildet ist.

## Claims

1. Disc brake, in particular for a commercial vehicle, with a brake caliper (1), which is fastened to a brake anchor plate, which comprises a brake disc (3), onto which brake pads (4) which each consist of a pad support plate (5) and a friction lining (6) can be pressed, and with an optical wear recognition means, wherein, for the optical wear recognition, the pad support plate (5) is provided with at least one attachment (10) which is raised in relation to a bearing surface (11) of the pad support plate (5), against which the friction lining (6) bears, **characterised in that** the attachment (10) is formed integrally with the pad support plate and is arranged in a region of the pad support plate (5) that can be viewed freely through an assembly opening (12).

2. Disc brake according to claim 1, **characterised in that** the attachment (10) is formed extending in the shape of a hump in the direction of the assembly opening (12).

3. Disc brake according to claim 1 or 2, **characterised in that** the attachment (10) has a boundary surface (13) on its side facing the friction lining, which surface proceeds parallel to and with a distance to the bearing surface (11).

4. Disc brake according to claim 3, **characterised in that** the distance of the boundary surface (13) to the bearing surface (11) approximately corresponds to the permissible remaining wear thickness of the friction lining (6).

5. Disc brake according to one of the preceding claims, **characterised in that** the attachment (10) is provided at the edge of the pad support plate (5), at which are provided fastening hooks (9) for fastening a retaining spring (8).

6. Disc brake according to claim 5, **characterised in that** the attachment (10) is arranged adjacent to the fastening hook (9), outside the covering region of the retaining spring (8).

7. Disc brake according to one of the preceding claims, **characterised in that** the attachment (10) is formed as an at least partially circumferential bead.

8. Disc brake according to one of the preceding claims, **characterised in that** the attachment (10) is cast when forming the pad support plate (5) as a cast part.

9. Brake pad for a disc brake of a commercial vehicle, with a pad support plate (5) and a friction lining (6) connected thereto, wherein, for the optical wear recognition, the pad support plate (5) is provided with at least one attachment (10) which is raised in relation to a bearing surface (11) of the pad support plate (5), to which the friction lining (6) is fastened, **characterised in that** the attachment is formed integrally with the pad support plate.

## Revendications

1. Frein à disque, notamment pour un véhicule utilitaire, comprenant un étrier (1) de frein fixé à un porte-frein et comprenant un disque (3) de frein, sur lequel, lors d'un freinage, des garnitures (4) de frein constituées respectivement d'une plaque (5) porte-garniture et d'une garniture (6) de friction peuvent être pressées, ainsi qu'une détection visuelle de l'usure, dans lequel il est prévu sur la plaque (5) porte-garniture, pour la détection visuelle de l'usure, au moins une saillie (10) bosselée par rapport à une surface (11) d'application de la plaque (5) porte-garniture, sur laquelle la garniture (6) de friction s'applique, **caractérisé en ce que** la saillie est formée d'une seule pièce avec la plaque porte-garniture et est disposée dans une partie de la plaque (5) porte-garniture pouvant être vue librement par une ouverture (12) de montage.

2. Frein à disque suivant la revendication 1, **caractérisé en ce que** la saillie (10) est constituée sous la forme d'une bosse s'étendant dans la direction de l'ouverture (12) de montage.

3. Frein à disque suivant la revendication 1 ou 2, **caractérisé en ce que** la saillie (10) a, du côté tourné vers la garniture (6) de friction, une surface (13) limite, qui s'étend parallèlement à la distance de la surface (11) d'application.

4. Frein à disque suivant la revendication 3, **caractérisé en ce que** la distance de la surface (13) limite à la surface (11) d'application correspond à peu près à l'épaisseur d'usure résiduelle admissible de la garniture (6) de friction.

5. Frein à disque suivant l'une des revendications précédentes, **caractérisé en ce que** la saillie (10) est prévue sur le bord de la plaque (5) porte-garniture, sur lequel sont prévus des crochets (9) de fixation d'un ressort (8) de maintien.

6. Frein à disque suivant la revendication 5, **caractérisé en ce que** la saillie (10) est disposée au voisinage du crochet (9) de fixation à l'extérieur de la zone de recouvrement du ressort (8) de maintien.

7. Frein à disque suivant l'une des revendications précédentes, **caractérisé en ce que** la saillie (10) est constituée en bourrelet faisant le tour au moins en partie.

8. Frein à disque suivant l'une des revendications précédentes, **caractérisé en ce que**, lors de la constitution de la plaque (5) porte-garniture en tant que pièce coulée, la saillie (10) est coulée avec elle.

9. Garniture de frein pour un frein à disque d'un véhicule utilitaire, comprenant une plaque (5) porte-garniture et une garniture (6) de friction, qui y est reliée, dans lequel il est prévu sur la plaque (5) porte-garniture, pour la détection visuelle de l'usure, au moins une saillie (10) bosselée par rapport à une surface (11) d'application de la plaque (5) porte-garniture, sur laquelle la garniture (6) de friction s'applique, **caractérisée en ce que** la saillie est constituée d'une seule pièce avec la plaque porte-garniture.
